Europäisches Patentamt

(19) European Patent Office

Office européen des brevets

(11) Numéro de publication: **0 082 095**
**B1**

(12) **FASCICULE DE BREVET EUROPEEN**

(45) Date de publication du fascicule du brevet:
**19.02.86**

(21) Numéro de dépôt: **82420174.3**

(22) Date de dépôt: **06.12.82**

(51) Int. Cl.⁴: **H 05 B 6/34,** H 05 B 6/22,
H 02 K 44/06

(54) **Dispositif de chauffage et/ou de brassage et/ou de transfert de métaux à l'état liquide.**

(30) Priorité: **08.12.81 FR 8123330**

(43) Date de publication de la demande:
**22.06.83 Bulletin 83/25**

(45) Mention de la délivrance du brevet:
**19.02.86 Bulletin 86/8**

(84) Etats contractants désignés:
**CH DE GB IT LI**

(56) Documents cités:
**AU - B - 40 519**
**BE - A - 827 573**
**DE - A - 2 655 393**
**DE - C - 228 308**
**FR - A - 1 600 320**
**FR - A - 2 422 311**

(73) Titulaire: **ALUMINIUM PECHINEY, 23, rue Balzac,**
**F-75008 Paris (FR)**

(72) Inventeur: **Vives, Charles, Route d'Avignon,**
**F-13160 Chateaurenard (FR)**

(74) Mandataire: **Vanlaer, Marcel et al, PECHINEY 28, rue de**
**Bonnel, F-69433 Lyon Cédex 3 (FR)**

ACTORUM AG

## Description

La présente invention a trait, dans le domaine de la métallurgie, au secteur de la fonderie et, plus particulièrement, à un dispositif de chauffage et/ou de brassage et/ou de transfert de métaux à l'état liquide dans lequel on met en application certains effets de l'électromagnétisme.

On sait que, dans la métallurgie classique, l'obtention de produits demi ouvrés passe nécessairement par une phase de fusion du métal destinée à le mettre dans un état particulièrement convenable à l'application de traitements tels que le brassage avec des éléments de purification, d'affinage et d'alliage, ou encore à la mise en forme par transfert et solidification dans différents types de moules. Autant d'opérations qui nécessitent des moyens appropriés de chauffage, de brassage et de transfert de métaux sous forme liquide.

Certes, l'homme de l'art, confronté à ces problèmes depuis de nombreuses décennies, a-t-il trouvé de nombreuses solutions recourant entre autres à des moyens électromagnétiques.

C'est ainsi qu'il est connu, par le document FR-A-1 600 320, d'équiper le fond d'un four contenant le métal de trois canaux: deux d'entre eux sont entourés de circuits magnétiques fermés et de bobines qui induisent un courant destiné à chauffer et à brasser le métal; le troisième, qui est pourvu d'une tubulure d'extraction, est équipé à son point d'intersection avec les deux autres, d'un électroaimant dont le champ agit sur le courant induit pour créer la force nécessaire au mouvement du métal vers l'extérieur.

Cependant, un tel dispositif présente les inconvénients suivants:

— il nécessite deux systèmes magnétiques distincts, l'un constitué par les circuits et les bobines générateurs de chaleur et de brassage, l'autre par l'électroaimant destiné à assurer le transfert du métal, ce qui entraîne le montage de deux lignes d'alimentation électrique particulières avec leurs auxiliaires de mesure, de contrôle;

— l'électroaimant est une source de pertes d'énergie importante, à la fois dans le cuivre par effet Joule, et dans le fer par hystérésis et courants de Foucault, car il est alimenté en courant alternatif;

— les courants induits, qui parcourent le métal, interagissent avec les fuites magnétiques des circuits en provoquant un brassage intense du liquide, d'où des perturbations au niveau des débits véhiculés et de la tenue des matériaux constituant les canaux;

— l'énergie dissipée par ces fuites ajoutées à l'énergie nécessaire pour assurer les fonctions normales de chauffage, brassage et transfert conduisent à une consommation d'électricité relativement importante.

En somme, ce dispositif, hormis l'avantage de permettre un réglage séparé des fonctions de chauffage et de transfert, apparaît néanmoins complexe et gros consommateur d'énergie.

C'est pourquoi, la demanderesse, soucieuse d'apporter sa contribution à l'amélioration des moyens destinés à assurer séparément ou simultanément le chauffage, le brassage et le transfert de métaux à l'état liquide, a cherché et mis au point un dispositif basé sur l'utilisation d'un récipient contenant le métal, dont la partie basse communique avec trois canaux convergeant en un même point dont l'un peut être prolongé à l'intérieur du récipient par une tuyauterie débouchant hors du récipient et caractérisé en ce que chacun des deux canaux non prolongeables présente, suivant son axe, une cavité en forme de doigt de gant, à l'intérieur de laquelle est enfilée l'extrémité du noyau d'un inducteur excité par un courant électrique alternatif de basse fréquence, à l'extérieur de laquelle de liquide occupe une zone annulaire, les deux canaux étant conçus de façon qu'au long des cavités, leur axe est situé dans un même plan vertical et forme avec l'horizontale un angle orienté vers le haut et inférieur à 60 degrés.

Ainsi, le dispositif selon l'invention reprend la forme classique des fours à canaux, mais s'en distingue par un choix et une disposition originale des moyens destinés à fournir l'énergie nécessaire au chauffage et à la mise en mouvement du liquide.

Ce choix consiste à utiliser deux inducteurs constitués chacun par une bobine excitatrice formée de deux fils enroulés simultanément en parallèle sur un cylindre à l'intérieur duquel est placé un noyau magnétique possèdant une symétrie de révolution, formé de tôles en fer à cristaux orientés. Les enroulements sont réalisés de manière à laisser à nu et à une de ses extrémités, un tiers environ de la longueur du noyau. Si l'on excite ces inducteurs par un courant électrique alternatif de fréquence 50 Hz, on crée autour de ce noyau et, particulièrement dans la partie dénudée, un champ magnétique de composante radiale importante.

La disposition des inducteurs sur chacun des canaux non prolongeables, qui débouchent du fond du récipient, est originale en ce sens que ces canaux présentent suivant leur axe des cavités en forme de doigt de gant à l'intérieur desquelles sont enfilées les extrémités dénudées des inducteurs et à l'extérieur desquelles le métal liquide occupe une zone annulaire.

Ainsi, lorsqu'on excite les inducteurs par un courant électrique alternatif, on crée une composante magnétique radiale qui provoque l'apparition, à la fois d'une force d'origine électromagnétique parallèle à l'axe du doigt de gant, ce qui tend à écarter le métal de l'extrémité du noyau, et d'un courant induit qui, par effet Joule, génère des calories et des forces d'agitation au sein du métal.

Il suffit, alors, de régler les conditions d'excitation et d'agencer convenablement la position des canaux pour utiliser convenablement les fonctions de chauffage, de brassage et de propulsion ainsi exercées.

C'est pourquoi, ces canaux ont été conçus de sorte que les doigts de gant ont leur axe situé dans un même plan vertical et dirigé vers le haut de manière que les forces créées soient orientées vers le point de convergence des trois canaux et dans le sens de propulsion de métal vers le canal prolongeable afin de pouvoir utiliser ces forces pour une extraction éventuelle du métal hors du récipient et son transfert vers des points d'utilisation tels que des moules par exemple. Les axes de doigts de gant forment ainsi, de préférence avec l'horizontale, un angle compris entre 0 et 60 degrés, ce qui permet d'avoir un profil de circulation convenable dans les canaux à l'endroit où ils convergent.

Suivant les caractéristiques des courants électriques qui excitent les inducteurs, on peut réaliser des conditions différentes de chauffage, de brassage et de transfert du métal liquide.

En effet, lorsque, par exemple, on excite chacun des deux inducteurs par des courants de même tension en phase, les forces créées dans les zones annulaires se conjuguent pour refouler le métal liquide par le canal prolongeable. On réalise ainsi, à la fois, des fonctions de chauffage et de transfert.

Par contre, si on excite chacun des inducteurs par des courants de même tension, mais déphasés de 180°, les champs magnétiques créés s'orientent d'un noyau vers l'autre, ce qui a pour effet d'empêcher le développement des forces dans une direction donnée, d'où limitation du dispositif aux fonctions de chauffage, de brassage du métal liquide.

On conçoit qu'en jouant sur le déphasage des deux courants excitant chacun des inducteurs, on puisse, sans perturber les conditions de chauffage, faire varier les conditions de brassage et les forces de propulsion, d'où la possibilité de régler à volonté le débit de transfert du métal liquide vers l'extérieur, indépendamment du chauffage. De même, il est également possible de n'exciter qu'un seul des inducteurs, auquel cas on peut, tout en chauffant, assurer une circulation du métal liquide de l'un des canaux non prolongeable vers l'autre.

De plus, comme le débit de métal est fonction du champ créé par l'inducteur et que les fuites de champ sont elles aussi fonction de la valeur de ce champ, on peut établir une relation entre ces pertes et le débit. Aussi, si on peut mesurer ces fuites, on pourra déterminer le débit et également le contrôler. Il suffit, pour cela, de placer une bobine à l'extérieur du récipient; le champ résultant des fuites induira dans cette bobine une différence de potentiel proportionnelle au débit. Ce courant induit pourra servir à moduler le courant d'excitation des inducteurs et lui donner une valeur telle qu'elle corresponde au débit souhaité.

On dispose ainsi d'une possibilité de contrôle très souple et à l'abri des phénomènes de corrosion par le métal liquide dont sont tributaires tous les autres systèmes par immersion.

Le dispositif selon l'invention présente ainsi de nombreux avantages:
– il est de conception et de réalisation simples,
– son rendement énergétique est compris entre 80% et 93% suivant l'épaisseur des parois de la cavité, le champ magnétique émanant des noyaux étant presque totalement récupéré et transformé en énergie calorifique et en forces utiles,
– la disposition des inducteurs à l'écart du récipient évite tout échauffement et tout risque de dégradation,
– les inducteurs sont facilement accessibles et peuvent donc être aisément remplacés en cas d'incident,
– le débit de métal peut être réglé et contrôlé de façon simple avec un système fiable à l'abri de toute détérioration par la chaleur ou l'action corrosive du métal,
– la température du métal, son brassage et le débit d'extraction peuvent être réglés de façon simple et indépendante en ajustant convenablement à la fois les tensions et les déphasages des courants d'excitation,
– le dispositif ne nécessitant que l'alimentation électrique de deux inducteurs, offre toutes les possibilités de commande à distance de systèmes de régulation de température, de vitesse de coulée et permet une automatisation facile dans des installations de coulée continue, semi-continue, ou pulsée,
– il s'applique à la plupart des métaux courants et de leurs alliages, que ce soit l'aluminium, le plomb, l'étain, le zinc, le cuivre, etc....

L'invention peut être illustrée à l'aide des dessins qui accompagnent la demande et qui représentent par la figure 1 une coupe verticale du dispositif selon l'invention, par les figures 2 et 3, des schémas de fonctionnement du dispositif.

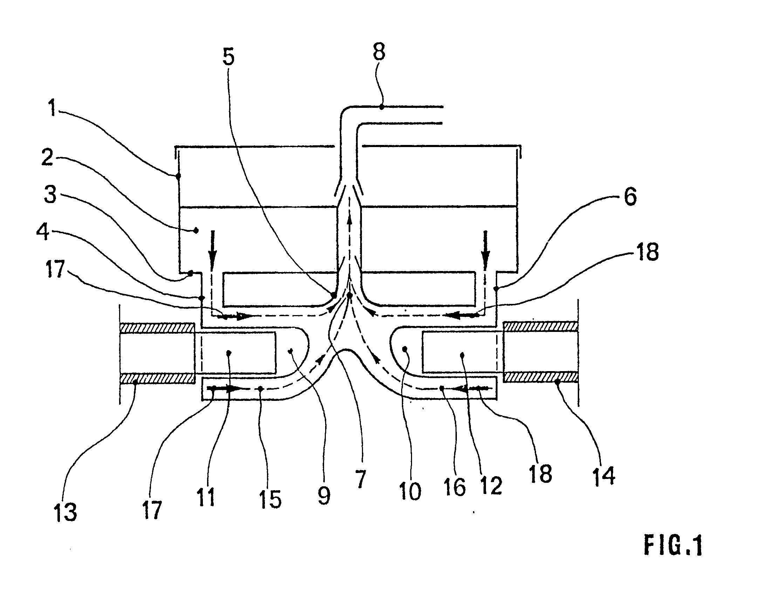

Sur la figure 1, on voit un récipient (1) contenant l'alliage (2) à l'état liquide, dont la partie basse (3) communique avec trois canaux (4, 5, 6) convergeant en un même point (7), dont l'un (5) peut être prolongé à l'intérieur du récipient par une tuyauterie (8) débouchant hors du récipient, et les deux autres canaux non prolongeables (4, 6) présentant suivant leur axe des cavités (9, 10) en forme de doigt de gant à l'intérieur desquelles sont enfilées les extrémités des noyaux (11, 12) d'inducteurs (13, 14) excitables par un courant électrique alternatif, à l'extérieur desquelles le liquide occupe des zones annulaires (15, 16); ces deux canaux sont conçus de sorte que les doigts de gant ont leur axe situé dans le plan de la feuille et dirigé horizontalement.

En fonictonnement, lorsque les inducteurs sont tous deux alimentés par un courant de 50 Hz, de même tension et de même phase, il se forme, sous l'action du champ émanant des noyaux, un courant induit qui assure le chauffage du métal et des forces dirigées suivant le sens des flèches (17, 18) qui agissent sur la zone annulaire entourant le noyau et provoquent le déplacement du liquide vers le point de convergence des canaux et sa propulsion hors du récipient par l'intermédiaire de la tuyauterie (8).

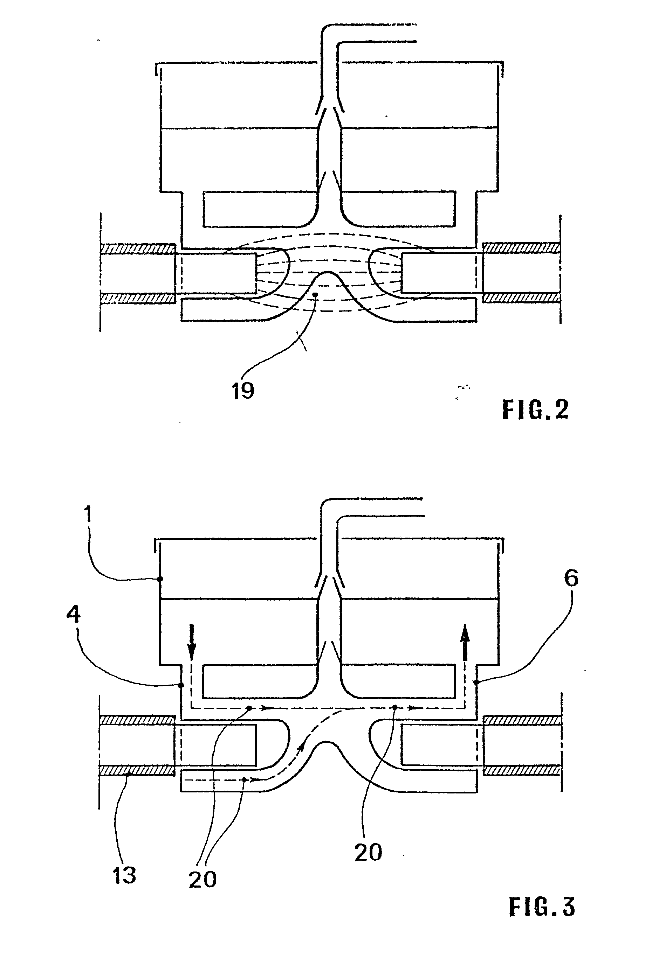

Sur la figure 2, on a schématisé le fonctionnement de l'installation lorsque les inducteurs sont alimentés par des courants alternatifs de même tension, mais déphasés de 180 degrés. Dans ce cas, les lignes de champ magnétique (19) émanant de deux noyaux s'allongent de l'un vers l'autre, de sorte que les forces de transfert s'annihilent et qu'il se produit, outre l'effet calorifique, un mouvement de déplacement du liquide perpendiculairement à l'axe des canaux, d'où un effet de brassage.

Sur la figure 3, on a schématisé le foncitonnement de l'installation lorsque seul l'inducteur (13) est excité. On a alors chauffage du métal et circulation du liquide du canal (4) vers le canal (6) et le récipient (1) suivant le sens des flèches (20).

L'invention sera mieux comprise à l'aide de l'exemple d'application suivant:

dans un récipient d'une capacité de 600 litres à la base duquel débouchent verticalement trois canaux de diamètre intérieur 4 cm, dont deux d'entre eux présentent une partie horizontale avant leur point de convergence, on met 1200 kg d'un alliage d'aluminium à l'état liquide. Les parties horizontales de ces canaux présentent deux cavités en forme de doigt de gant de longueur 36 cm, de diamètre intérieur 17 cm, ayant une paroi d'épaisseur 1 cm, à l'extérieur desquelles le liquide occupe une zone annulaire de largeur 3 cm.

A l'intérieur de chaque cavité se trouve un noyau en fer de diamètre 14 cm et de longueur 1000 cm, sur lequel est enroulé un inducteur formé de 100 m de fil de cuivre de section 0,6 cm² placé de manière à laisser à nu une extrémité du noyau sur une longueur de 30 cm qui est engagée à l'intérieur de la cavité.

Chacun des inducteurs étant excité par un courant alternatif de 50 Hz sous une tension de 200 volts, on a maintenu le métal à une température voisine de 720°C.

Les courants étant en phase, on assure pour une puissance totale dépensée de 40 kilowatts, une force permettant de débiter 25000 kg/heure de métal sous une pression de 6 m d'Al.

En augmentant progressivement le déphasage φ des courants excitant les deux inducteurs jusqu'à 180 degrés, on a réduit le débit, la pression et la puissance consommée aux valeurs suivantes:
φ = 45 degrés, puissance 40 Kw, débit 22000 kg/h, pression 5 m d'Al
φ = 90 degrés, puissance 40 Kw, débit 20000 kg/h, pression 4 m d'Al.

Pour φ = 180 degrés, le débit était nul, mais on constatait un brassage convenable du liquide. L'absence d'excitation sur l'un des inducteurs conduisait pour une tension de 200 volts et une puissance consommée de 20 Kw à une circulation de liquide de l'un des canaux non prolongeable vers l'autre, à un débit de 13000 kg d'Al par heure.

Le dispositif selon l'invention trouve son application en métallurgie, notamment dans le secteur de la fonderie pour le maintien de métaux en fusion, leur brassage avec différents éléments, leur transfert vers des installations de coulée.

## Revendications

1. Dispositif de chauffage et/ou de brassage et/ou de transfert de métaux à l'état liquide constitué par un récipient (1) contenant le liquide, dont la partie basse communique avec trois canaux (4, 5, 6) convergeant en un même point (7) et destinés à la circulation dudit liquide (2), dont l'un (5) peut être prolongé à l'intérieur du récipient par une tuyauterie (8) débouchant hors du récipient (1), caractérisé en ce que chacun des deux canaux (4, 6) non prolongeables présente suivant son axe une cavité (9, 10) en forme de doigt de gant à l'intérieur de laquelle est enfilée l'extrémité du noyau (11, 12) d'un inducteur (13, 14) excité par un courant alternatif de basse fréquence, à l'extérieur de laquelle le liquide (2) occupe une zone annulaire (15, 16), les deux canaux (4, 6) étant conçus de façon qu'au long des cavités (9, 10), leur axe est situé dans un même plan vertical et forme avec l'horizontale un angle orienté vers le haut et inférieur à 60 degrés.

2. Dispositif selon la revendication 1, caractérisé en ce que le chauffage et le transfert de liquide (2) vers le canal prolongeable (5) sont obtenus par excitation de chacun des inducteurs (13, 14) par des courants alternatifs de même tension en phase.

3. Dispositif selon la revendication 1, caractérisé en ce que le chauffage et le brassage de liquide sont obtenus par excitation de chacun des inducteurs (13, 14) par des courants alternatifs déphasés de 180°, de même tension.

4. Dispositif selon la revendication 2, caractérisé en ce que la vitesse de transfert du liquide (2) vers le canal prolongeable est réglée par la valeur du déphasage des courants qui excitent chacun des inducteurs (13, 14).

5. Dispositif selon la revendication 1, caractérisé en ce que le chauffage et le transfert d'un des canaux non prolongeables (4, 6) vers l'autre sont obtenus par excitation de l'un des inducteurs (13, 14).

## Patentansprüche

1. Vorrichtung zum Erwärmen und/oder Umrühren und/oder Überführen von Metallen in flüssigem Zustand mit – einem Behälter (1), der die Flüssigkeit enthält und dessen unterer Teil mit drei Kanälen (4, 5, 6) in Verbindung steht, die in einem Punkt (7) zusammenlaufen und zur Zirkulation der Flüssigkeit (2) bestimmt sind, wobei einer (5) der Kanäle eine Leitung (8), die ausserhalb des Behälters mündet, in das Innere des Behälters verlängert werden kann, dadurch gekennzeichnet, dass jeder der nicht verlängerbaren Kanäle (4, 6) längs seiner Achse einen Hohlraum (9, 10) in Form eines Handschuhfingers aufweist, in dessen Innerem das Ende eines Induktorkerns (11, 18, 13, 14) eingefügt ist, der durch einen niederfrequenten Wechselstrom erregt wird und ausserhalb dessen die Flüssigkeit (2) einen ringförmigen Raum (15, 16) ausfüllt, wobei die beiden Kanäle (4, 6) derart ausgebidet sind, dass deren Achsen längs der Hohlräume (9, 10) in derselben vertikalen Ebene angeordnet sind und mit der horizontalen einen nach oben geöffneten Winkel von weniger als 60° einschliessen.

2. Vorrichtung nach Anspruch 1, dadurch gekennzeichnet, dass das Erwärmen und Überführen der Flüssigkeit (2) auf den verlängerbaren Kanal (5) zu durch Erregung jedes der Induktoren (13, 14) mit Wechselströmen gleicher Spannung und Phase erzielt wird.

3. Vorrichtung nach Anspruch 1, dadurch gekennzeichnet, dass das Erwärmen und Umrühren der Flüssigkeit durch Erregung jeder der Induktoren (13, 14) mittels um 180° phasenverschobener Wechselströme mit gleicher Spannung erzielt wird.

4. Vorrichtung nach Anspruch 2, dadurch gekennzeichnet, dass die Geschwindigkeit der Überführung der Flüssigkeit (2) zum verlängerbaren Kanal hin über den Wert der Phasenverschiebung der Ströme geregelt wird, die jeden der Induktoren (13, 14) erregen.

5. Vorrichtung nach Anspruch 1, dadurch gekennzeichnet, dass das Erwärmen und das Überführen der Flüssigkeit aus einem der nicht verlängerbaren Kanäle (4, 6) in den anderen durch Erregung eines der Induktoren (13, 14) erzielt wird.

**Claims**

1. A device for heating and/or agitating and/or transferring metals in a liquid state consisting of a vessel (1) containing the liquid, the lower part of which is connected to three channels (4, 5, 6) convering at a common point (7) and designed to circulate the said liquid (2), one of which (5) can be extended into the interior of the vessel by a conduit (8) projecting from the vessel (1), characterised in that each of the two non-extendable channels (4, 6) has a recess (9, 10) along its axis in the form of a glove finger, in the interior of which is inserted the end of the core (11, 12) of an inductor (13, 14) energised by a low-frequency alternating current, and on the outside of which the liquid (2) occupies an annular region (15, 16), the two channels (4, 6) being designed such that along the recesses (9, 10), their axis is positioned in a common vertical plane and forms with the horizontal an angle orientated upwardly and of loss than 60 degrees.

2. A device according to claim 1, characterised in that heating and transfer of liquid (2) towards the extendable channel (5) are achieved by energising each of the inductors (13, 14) by alternating currents of the same voltage and in phase.

3. A device according to claim 1, characterised in that heating and agitating of the liquid are achieved by energising each of the inductors (13, 14) by alternating currents out of phase by 180° and of the same voltage.

4. A device according to claim 2, characterised in that the speed of transfer of the liquid (2) towards the extendable channel is controlled by the phase difference of the currents energising each inductor (13, 14).

5. A device according to claim 1, characterised in that heating and transfer from one of the nonextendable channels (4, 6) to the other are achieved by energising one of the inductors (13, 14).

FIG.1

FIG.2

FIG.3